# EUROPEAN PATENT APPLICATION

(11) **EP 1 052 273 A1**
(43) Date of publication of application: **15.11.2000**
(21) Application number: 99201461.3
(22) Date of filing: 12.05.1999
(51) Int. Cl.: C08L 67/06, F21V 7/22, C08L 67/07

(54) **Resin composition based on unsaturated polyester**

(71) Applicant: DSM N.V., 6411 TE Heerlen (NL)
(72) Inventor: Buhl, Dieter, 67227 Frankenthal (DE); Gerth, Dale, 67346 Speyer (DE); Zwecker, Joachim, 69469 Weinheim (DE)

(57) **Abstract**

The invention relates to a resin composition comprising (A) an unsaturated polyester, (B) a monomer that is copolymerizable with the unsaturated polyester (A), (C) optionally an anti-shrink component, (D) reinforcing fibres and (E) fillers, and is characterized in that the unsaturated polyester (A) has an acid number of less than 18 mg KOH/g and is a combination of a standard unsaturated polyester (A1) having an acid number of more than 13 mg of KOH/g and of a modified unsaturated polyester (A2) having an acid number of less than 13 mg of KOH/g, the acid number being as measured according to ISO 3682.

## Description

The invention relates to a resin composition comprising (A) an unsaturated polyester; (B) a monomer that is copolymerizable with the unsaturated polyester (A); (C) optionally an anti-shrink agent; (D) reinforcing fibres; and (E) fillers.

Such a resin composition - usually referred to by for example BMC ('Bulk Moulding Compound'), SMC ('Sheet Moulding Compound'), TMC ('Thick Moulding Compound') or CMC ('Continuous Moulding Compound') - is known from EP-A-0681000. The known resin composition described herein is used to produce end products having good mechanical properties, a high thermal and chemical resistance, dimensional stability and a smooth surface. It is for example possible to use the known resin composition to produce headlights for vehicles, for example headlights for cars or lorries.

Such headlights consist of an housing with a transparent front (the glass), within which housing a reflector is placed that is designed so that, when the light comes on, a well-aligned beam of light is formed that leaves the headlight through the glass. Headlight housings and headlight reflectors are for example made by injection-moulding of BMC resin compositions. The reflector's inside wall is coated with a thin reflecting layer, for example a vapour-deposited aluminium layer, whose surface must be as smooth as possible to ensure good operation. If this is not the case then the light dispersion becomes unacceptably high. This can be seen, for instance, from the disclosure in a presentation by Dr.-Ing. W. Haack (Robert Bosch GmbH) at the "Internationale Fachtagung GFK im Fahrzeugbau" (October 1988). The reflecting layer must also show good adhesion to the reflector's inside wall.

The parts of the headlight, that is housing and reflector, must also have a high thermal stability.

The known resin composition described in EP-A-0681000 presents the drawback that so-called fogging occurs after some time of use. Fogging is in the context of this application understood to be the deposition on the glass of the headlight of organic compounds originating from the resin composition. Fogging is of course highly undesirable because it reduces the transparency of the glass of the headlight. The organic compounds released from the known resin composition can in principle be of any kind. Examples are decomposition products formed under the influence of high temperatures and/or other ambient factors (such as moisture), processing aids (for example agents for reducing the viscosity), and/or agents facilitating the removal of the end product from the mould.

The aim of the present invention is to provide a resin composition with reduced fogging, good mould release properties, excellent adhesion to reflecting materials such as aluminium, and a very smooth surface.

To this end the resin composition according to the invention is characterized in that the unsaturated polyester (A) has an acid number of less than 18 mg KOH/g and is a combination of a standard unsaturated polyester (A1) having an acid number of more than 13 mg of KOH/g and of a modified unsaturated polyester (A2) having an acid number of less than 13 mg of KOH/g, the acid number being as measured according to ISO 3682.

As meant herein, the standard unsaturated polyesters (A1) having an acid number of more than 13 mg of KOH/g (as measured according to ISO 3682) are well-known polyesters obtained through the reaction of organic compounds containing carboxyl and/or alcohol groups. These unsaturated polyesters are commercially available. Further details of these unsaturated polyesters are shown later in this application.

Mostly, these unsaturated polyesters will have acid values in the range of 20 to 30 mg of KOH/g, but unsaturated polyesters having an acid number that is slightly reduced, that is in the range of 13 to 20 mg of KOH/g are available as well. Also unsaturated polyesters having an even more reduced acid value, that is having an acid value of less than 13 mg of KOH/g, are known per se. In the context of the present patent application these latter unsaturated polyesters are being referred to as modified unsaturated polyesters (A2) having an acid number of less than 13 mg of KOH/g. More details on the unsaturated polyesters (A1) and (A2) will be given hereinafter.

The use of combinations of the standard unsaturated polyesters (A1) and modified unsaturated polyesters (A2) in resin compostions having an acid number of less than 18 mg of KOH/g for the purpose described above has however not been described. The terms standard unsaturated polyesters (A1) and modified unsaturated polyesters (A2) as used herein are also intended to refer to mixtures of standard unsaturated polyesters (A1), respectively to mixtures of modified unsaturated polyesters (A2).

Another advantage of the resin composition according to the invention is that it has an excellent temperature resistance. Because of this a headlight reflector made from these resin compositions has good dimensional stability, in particular also at the headlight's high operating temperature, which can rise to above 200°C.

Reduced acid numbers of unsaturated polyesters are usually obtained by reacting (at least part of) the acid end groups of an unsaturated polyester with organic compounds that can react with these end groups. It is for example possible to obtain a reduced acid number by reacting the acid end groups of the unsaturated polyester with alcohols.

The standard unsaturated polyesters (A1) in the resin composition according to the invention, as well as the standard unsaturated polyesters used as a starting material for the modified unsaturated polyesters (A2) may be any polyester obtained through the reaction of organic compounds containing carboxyl and/or alcohol groups. At least one of the starting compounds then contains unsaturated compounds. These unsaturated polyesters are usually composed from one or more aliphatic and/or cycloaliphatic mono-, di- and/or polyvalent alcohols and one or more aliphatic, cycloaliphatic and/or aromatic di- or polyvalent carboxylic acids and, optionally, monocarboxylic acids and/or the esters and anhydrides derived therefrom.

Examples of suitable di- or polyvalent carboxylic acids are fumaric acid, maleic acid, chloromaleic acid, itaconic acid, citraconic acid, malonic acid, succinic acid, glutaric acid, methylglutaric acid, adipic acid, sebacic acid, 1,4-cyclohexanedicarboxylic acid, phthalic acid, isophthalic acid, terephthalic acid, trimellitic acid, dihydrophthalic acid, tetrahydrophthalic acid, hexahydrophthalic acid, tetrachlorophthalic acid, endomethylene tetrahydrophthalic acid (HIMIC), hexachloro endomethylene tetrahydrophthalic acid and/or the corresponding esters or anhydrides.

The unsaturated carboxylic acids to be used are preferably ethylenically unsaturated carboxylic acids, in particular α,β-ethylenically unsaturated carboxylic acids.

It is preferred that the unsaturated polyester contains fumaric acid, maleic acid and/or terephthalic acid as carboxylic acid units. Also dicyclopentadiene modified resins as described in, for instance, EP-A-0783026 can be used.

Suitable alcohols used in the preparation of the unsaturated polyesters preferably contain fewer than 30 carbon atoms. Examples of suitable alcohols are benzyl alcohol, ethylene glycol, diethylene glycol, triethylene glycol, propylene glycol, dipropylene glycol, neopentyl glycol, butanediol, pentanediol, hexanediol, dimethylol cyclohexane, glycerol, trimethylol propane, pentaerythritol, dipentaerythritol, hydrogenated bisphenol-A, 2,2-bis-(2-hydroxyethoxy)phenylpropane and/or 2,2-bis-(2-hydroxypropoxy)phenylpropane.

As the alcohol in the unsaturated polyesters use is preferably made of (di)ethylene glycol, (di)propylene glycol and/or neopentyl glycol.

The unsaturated polyesters may be amorphous or crystalline.

Other unsaturated polyesters that are suitable to be used as the starting unsaturated polyesters for preparing the modified unsaturated polyesters (A2) for the resin composition according to the invention are the vinyl ester polymers. Vinyl ester polymers, also known under the name of epoxy (meth)acrylates, are the addition products of polyepoxides and unsaturated carboxylic acids, preferably acrylic acid and methacrylic acid. Suitable polyepoxides are epoxy novolak resins and in particular polyepoxides based on bisphenol A. Another class of suitable vinyl ester polymers consists of the esterification products of alkoxylated bisphenol A and (meth)acrylic acid.

Other polyesters that are suitable as component (A2) in the resin composition according to the invention are the vinyl ester urethane polymers. Vinyl ester urethane polymers, also known under the name of urethane (meth)acrylates, are the addition products of a polyvalent isocyanate, a polyvalent alcohol and/or amine and a hydroxyalkyl (meth)acrylate.

The monomer (B) that is copolymerizable with the polyesters (A1) and (A2) contains one or more vinyl groups and usually fewer than 50 carbon atoms. Suitable monomers are for example vinyl aromatic monomers, vinyl ethers, vinyl esters, for instance acrylate esters, and/or allyl ethers and esters. Preferably the monomer (B) is a vinyl aromatic monomer.

Vinyl aromatic monomers can for example suitably be chosen from the group comprising styrene, α-methylstyrene, o-, m-, p-methylstyrene, p-chlorostyrene, t-butylstyrene, divinyl benzene, bromostyrene, vinyl naphthalene, α-chlorostyrene and divinyl naphthalene. Preferably styrene is used.

Acrylate type compounds are for example chosen from the group comprising methyl, ethyl, propyl, isopropyl, butyl, isobutyl, phenyl and benzyl acrylate or methacrylate, 2-ethylhexyl (meth)acrylate, dihydrocyclopentadiene acrylate, cyclohexyl (meth)acrylate, butanediol (meth)acrylate, butanediol di(meth)acrylate, (meth)acrylamide, the reaction products of (meth)acrylic acid and phenyl or cresyl glycidyl ethers, propylene glycol di(meth)acrylate, di- and triethylene glycol di(meth)acrylate, di- and tripropylene glycol di(meth)acrylate, hexanediol di(meth)acrylate and trimethylol propane tri(meth)acrylate. Preferably hydroxyethyl methacrylate and hydroxypropyl methacrylate are used.

Vinyl ether, vinyl ester and allyl compounds can for example also be suitably chosen from the group comprising allyl phthalate, diallyl phthalate, diallyl isophthalate, triallyl cyanurate, diallyl terephthalate, vinyl acetate, vinyl propionate, vinyl pivalate, vinyl versatate, vinyl propyl ether, divinyl ether, vinyl butyl ether and vinyl benzyl ether.

A suitable total amount of components (A1), (A2) and (B) in the resin composition according to the invention is between 5 and 40 wt.%, relative to the total weight of components (A1) up to and including (E). More preferably this is between 10 and 20 wt.%.

Suitable anti-shrink components (C) in the resin composition according to the invention are thermoplastic polymers such as for example polyvinyl acetate, ethylene vinyl acetate, polystyrene, polyacrylates, such as for example polymethyl methacrylate, saturated polyesters, polyethylene, polyurethane and rubbers based on butadiene and styrene. Such anti-shrink components are usually referred to as 'low profile additives' (LPA). It is also possible to use some of the aforementioned polymers (C) in a carboxylated form, for example, as a copolymer with ethylenically unsaturated carboxylic acids or the corresponding anhydride.

A suitable amount of anti-shrink component (C) in the resin composition according to the invention is between 0 and 20 wt.%, relative to the total weight of components (A1) up to and including (E). More preferably this is between 2 and 15 wt.%, most preferably between 5 and 10 wt.%.

The resin composition according to the invention may further contain inorganic and/or organic reinforcing fibres (D) in the form of rovings or chopped fibres. The average length of the reinforcing fibres is usually between 0.05 and 40 mm. Preferably the reinforcing fibres have a weight average length of between 2 and 15 mm, most preferably between 4 and 6 mm. Suitable reinforcing fibres are for example glass fibres, carbon fibres, cellulose, sisal and jute fibres. It is also possible to use synthetic organic fibres, such as for example fibres based on drawn polyethylene, polyamide and polycarbonate. Preferably the resin composition contains glass fibres.

A suitable amount of reinforcing fibres (D) in the resin composition according to the invention is between 1 and 40 wt.%, relative to the total weight of components (A1) up to and including (E). More preferably this is between 8 and 20 wt.%.

The resin composition according to the invention further contains the fillers (E) commonly used for resin compositions. Suitable fillers are for example calcium carbonate, kaolin, heavy spar, dolomite, quartz flour, slate flour, talcum, aluminium trihydrate, sand. Optionally the resin composition may also contain pigments and colourants. It is also possible to add further fillers (E) to the resin composition in order to provide a reinforcing function in addition to the reinforcing fibres (D). Used in such way the fillers (E) also can be referred to as reinforcing materials (E).

Preferably the amount of fillers (E) is between 20 and 90 wt.%, relative to the total weight of the resin composition. Most preferably it is between 50 and 70 wt.%.

It is particularly preferred that the modified unsaturated polyesters (A2) in the resin composition according to the invention have been obtained as a reaction product from a reaction of a monofunctional component (F) containing an epoxide group or an isocyanate group with the acid end groups of a standard unsaturated polyester having an acid number of more than 13 mg of KOH/g.

'Monofunctional' is in the context of this application understood to mean that component (F) will react predominantly with the acid end groups of unsaturated polyesters via its epoxide or isocyanate group. Compound (F), however, may contain other reactive groups, provided that their reactivity with the acid end groups is much lower than that of the epoxide or isocyanate group.

Suitable components (F) which can be used for preparing the modified unsaturated polyesters (A2) for the resin compositions according to the invention are preferably monofunctional epoxide compounds that are very reactive with the acid end groups of the unsaturated polyester (A). Examples of suitable components (F) are 1,2-alkylene oxides, for instance, 1,2-ethylene oxide, 1,2-propylene oxide and 1,2-butylene oxide; and halogen containing 1,2-epoxides, for instance epichlorohydrin, epifluorohydrin and epibromohydrin; and styrene oxides, which may be substituted; and glycidyl ethers, for example hexylglycidyl ether, phenylglycidyl ether and/or allylglycidyl ether.

Preferably component (F) is a monofunctional epoxide represented by formula (1) : 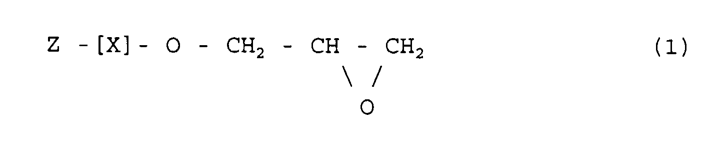 in which Z is an organic group having from 2 up to and including 20 carbon atoms, and in which [X] represents a carbonyl group or a methylene group.

Formula (1) therefore represents a class of esters (if [X] is a carbonyl group) and a class ethers (if [X] is a methylene group). The organic group Z may be a linear or branched alkyl group, and may optionally contain cycloaliphatic, olefinic or aromatic parts.

Also other substituents may be present therein, provided that the reactivity of the substituent(s) with the acid end groups of the standard unsaturated polyester is much lower than that of the epoxide group.

Suitable Z groups are for example C₂ - C₂₀ alkyl or branched alkyl (for instance, butyl, pentyl, neopentyl, octyl, dodecyl, etc.), aryl, phenyl, alkylphenyl, and/or cresyl. Another suitable glycidyl ester of an unsaturated carboxylic acid is for example glycidyl (meth)acrylate.

Preferably Z is an alkyl group having from 8 up to and including 18 carbon atoms. Most preferably it is a C₈ - C₁₂ branched alkyl group.

In the resin compositions according to the invention the weight ratio between the standard unsaturated polyester (A1) and the modified unsaturated polyester (A2) is preferably in the range of 5:95 to 95:5.

More preferably, the weight ratio between the standard unsaturated polyester (A1) and the modified unsaturated polyester (A2) is in the range of 30:70 to 70:30.

To facilitate the removal from the mould of a moulded part produced using the resin composition according to the invention, for example a headlight reflector, the resin composition optionally contains a mould release agent (G). Suitable mould release agents are known to a person skilled in the art and are for example chosen from the group comprising zinc stearate, calcium stearate and/or magnesium stearate and alkylene ether waxes. Such mould release agents are usually added to known resin compositions in amounts of between 0.3 and 2.0 wt.%. The resin composition according to the invention presents the added advantage that the mould release agent can be omitted without this reducing the ease with which a moulded part can be removed from the mould.

Preferably the resin composition according to the invention contains between 0.01 and 2.0 wt.% mould release agent, more preferably less than 0.5 wt.%, relative to the resin composition's total weight. Most preferably the resin composition according to the invention contains no mould release agent.

The amount of component (F) in the resin composition according to invention can be chosen within a wide range. A suitable amount for component (F) is between 0.1 and 10 wt.%, relative to the total weight of component (A2) in the resin composition. Preferably the amount of component (F) is between 0,3 and 8 wt.%, relative to the total weight of components (A2). Most preferably it is between 0.5 and 5 wt.%, relative to the total weight of component (A2).

The resin composition may optionally also contain a thickener. Such thickeners are known to a person skilled in the art and comprise for example oxides and hydroxides of the metals of groups I, II and III of the Periodic System. Examples of suitable thickeners are the oxides or hydroxides of magnesium, lithium, calcium and/or aluminium. Preferably use is made of magnesium oxide. It is also possible to use agents that accelerate thickening, such as cholinchloride and/or semi-esters of a polyetherpolyol and maleic anhydride. It is also possible to use a polyisocyanate, optionally combined with a metal oxide or metal hydroxide.

Thickeners are usually used in amounts of between 0.1 and 10 wt.%, relative to the weight of the resin composition.

Curing of the resin composition is preferably initiated by an initiator. Suitable initiators are free-radical-forming peroxides, such as for example diacyl peroxides, hydroperoxides, percarbonates and mixtures hereof. Suitable diacyl peroxides are for example diacetyl peroxide, dibenzoyl peroxide, di-p-chlorobenzoyl peroxide, phthaloyl peroxide, succinyl peroxide, dilauryl peroxide and acetylcyclohexane sulphonyl peroxide. Suitable hydroperoxides are for example methylethylketone peroxide, t-butylhydroperoxide, t-butylperbenzoate, cyclohexanone peroxide and cumene hydroperoxide. Suitable percarbonates are for example cyclohexane percarbonate and bis-(4-tert-butylcyclohexyl)percarbonate.

The resin composition according to the invention may optionally also contain one or more inhibitors in an amount of between 0.0005 and 0.2 wt.%, preferably between 0.01 and 0.1 wt.%, relative to the total weight of components (A) up to and including (E). Inhibitors that are suitable for use are for example hydroquinone, 2,5-di-tert-butylhydroquinone, tert-butylcatechol, benzoquinone, chloranil, naphthoquinone, phenothiazine, copper naphthenate and thiodiphenylamine.

The resin composition according to the invention can be prepared by mixing at least components (A1) up to and including (E) in a suitable mixing apparatus such as a kneader or rolls. The resulting mass can subsequently be processed into an end product, for example a headlight reflector, by means of compression moulding or, preferably, by means of injection-moulding in a heated mould and curing at a suitable temperature, usually between 100°C and 200°C.

The invention will now be further elucidated with reference to the following examples and comparative examples. The examples are not intended to limit the invention to the disclosure of the examples only.

### The components used:

Palapreg™ P 18-21 and Synolite™ 0423-N-2 :
a standard unsaturated polyester resin dissolved in 35 wt.% styrene as a reactive monomer, obtainable from DSM Resins, the Netherlands (as component (A1)). The acid number measured according to ISO 3682 is 20 mg of KOH/g.

Synolite™ 1440-N-1 :
a modified unsaturated polyester resin containing a glycidyl ester (as component (F)) and 35 wt.% of styrene as a reactive monomer, obtainable from DSM Resins, the Netherlands (as component (A2). The acid number measured according to ISO 3682 is less than 2 mg of KOH/g.

Palapreg™ H 852-03 and Synolite™ 8199-M-1
an anti-shrink component based on saturated polyester, dissolved in 60 (resp. 65) wt.% of styrene, obtainable from DSM Resins, the Netherlands (as component (C)).

P 204, 26 mm and Chopped Roving 5230 :
glass fibres with lengths before compounding of about 26 mm (resp. of between 4.5 and 13 mm), obtainable from Vetrotex at Chambery, France (as component (D)).

Millicarb™ :
calcium carbonate powder, obtainable from Omya/Pluss-Staufer, Germany (as component (E)).

Zincum 5™ :
Zinc stearate from Bärlocher, Germany, as a mould release agent (G).

Trigonox-C™ :
t-butylperbenzoate from Akzo Chemicals, The Netherlands, as an initiator for curing

### Example 1 :

Resin composition comprising an unsaturated polyester having an acid number of less than 18 mg KOH/g, being a combination of a standard and a modified polyester.

25 parts by weight of Palapreg™ P 18-03 and 25 parts by weight of Synolite™ 1440-N-1 and 50 parts by weight of Palapreg™ H 852-03 were mixed in a mixing tub together with 0.2 parts by weight of inhibitor (solution of 25% parabenzoquinone in styrene) and 1.5 parts by weight of Trigonox-C™. Next, 250 parts by weight of Millicarb™ and 3 parts by weight of Zincum 5™ were added to the same mixing tub with constant stirring. The paste obtained was then pumped to a Z-blade mixer, where 50 parts by weight of chopped glass fibres P 204 (26 mm) were added to this mass and intimately mixed with the mass for 1-3 minutes.

### Comparative Example A :

Resin composition comprising an unsaturated polyester having an acid number of more than 18 mg KOH/g, being a standard unsaturated polyester.

55.8 parts by weight of Synolite™ 0423-N-2 and 37.7 parts by weight of Synolite™ 8199-M-1 were mixed in a mixing tub together with 6.5 parts by weight of styrene monomer, 0.03 parts by weight of inhibitor (parabenzoquinone), 1.5 parts by weight of Trigonox-C™ and 5 parts by weight of a mould release agent (Zincum 5™). Next, 150 parts by weight of Millicarb™ were added to the same mixing tub with constant stirring. The mixture obtained was then pumped to a Z-blade mixer, to which another 150 parts by weight of Millicarb™ were subsequently added, and kneaded to form a homogeneous mass. Ultimately 65 parts by weight of Chopped Roving 5230 were added to this mass and intimately mixed with the mass for 1-3 minutes.

### Comparative Example B :

Resin composition comprising an unsaturated polyester having an acid number of less than 3 mg KOH/g, being a modified unsaturated polyester.

50 parts by weight of Synolite™ 1440-N-1 and 50 parts by weight of Palapreg™ H 852-03 were mixed in a mixing tub together with 0.2 parts by weight of inhibitor (solution of 25% parabenzoquinone in styrene) and 1.5 parts by weight of Trigonox-C™. Next, 250 parts by weight of Millicarb™ and 3 parts by weight of Zincum 5™ were added to the same mixing tub with constant stirring. The paste obtained was then pumped to a Z-blade mixer, where 50 parts by weight of chopped glass fibres P 204 (26 mm) were added to this mass and intimately mixed with the mass for 1-3 minutes.

### Test method for determining fogging

The following test method was used so as to be able to determine the amount of fogging.

The resin compositions obtained as described above (in the Example and Comparative Examples) are used to produce flat plates with a thickness of 3.5 mm by means of compression moulding. To this end a mass of the resin composition is introduced into a plate-shaped mould, which mould is subsequently closed under pressure by means of a press. The mould is kept at a temperature of 150°C. Curing takes place in the mould for 1.5 minutes.

Next, specimen plates (10 cm x 10 cm) are sawn from the plates obtained. A specimen plate is then clamped onto a heating plate with the aid of a clamping device. A metal cylinder with a diameter of 5 cm and a height of 10 cm, covered with a previously weighed watch glass, is placed on the plate. A temperature sensor is installed on the specimen plate immediately next to the metal cylinder, to measure the surface temperature of the specimen plate and also to control the supply of heat from the heating plate. The heating is set so that the surface temperature remains between 160°C and 170°C during the test.

The watch glass is cooled by means of a constant stream of compressed air, so that any low-molecular substances evaporated from the specimen plate condense onto it.

After a preset time of 4 hours the heating is switched off and the amount of fogging of the resin composition is determined by visual assessment, using the following ranking:

| Ranking | Characteristic |
|---|---|
| ++ | a small amount of transparent deposit |
| + | A large amount of transparent deposit |
| - | a small amount of non-transparent deposit |
| -- | A large amount of non-transparent deposit |

### Determination of surface quality

In addition to the fogging test described above, also other characteristics of the SMC's were evaluated, according to qualitative assessments for SMC's. More specifically the following characteristics:
(i) shrinkage;
(ii) long term waviness;
(iii) short term waviness;
(iv) fiber printout;
(v) homogeneity; and
(vi) gloss,
were assessed by persons skilled in making such visual assessments, using a rating as follows:
1 = excellent; 2 = good; 3 = amply sufficient; 4 = partly not sufficient; 5 = poor; 6 = very poor.

The test results for fogging test and for assessment of surface properties are summarized in table 1.

Because the mould release properties were good for all resin compostions tested and did not differ significantly from each other, data on mould release properties have not been listed separately in the table.

**Table 1**

| Ex. / Comp. Ex. | Fogging ranking | Surface properties (i)-(vi) as listed above | | | | | | |
|---|---|---|---|---|---|---|---|---|
| | | (i) | (ii) | (iii) | (iv) | (v) | (vi) | overall |
| Ex. I | ++ | 2 | 2 | 2⁻ | 2⁻ | 2⁻ | 1-2 | 2⁻ |
| Comp. Ex. A | -- | 2 | 2⁻ | 2 | 2⁻ | 2⁻ | 1-2 | 2⁻ |
| Comp. Ex. B | ++ | 4 | 2 | 4 | 5 | 3 | 3-4 | 3-4 |

The test results obtained show that the amount of fogging that occurs with the resin composition according to the invention is many times lower than with the resin composition according to the state of the art (Comp.Ex. A) and that surface properties are much better for the resin composition according to the invention as compared with the resin composition of Comp.Ex. B. The resin compositions according to the invention are thus excellently suitable for being used in headlights.

## Claims

1. Resin composition comprising:
(A) an unsaturated polyester;
(B) a monomer that is copolymerizable with the unsaturated polyester (A);
(C) optionally an anti-shrink component;
(D) reinforcing fibres; and
(E) fillers,
characterized in that the unsaturated polyester (A) has an acid number of less than 18 mg KOH/g and is a combination of a standard unsaturated polyester (A1) having an acid number of more than 13 mg of KOH/g and of a modified unsaturated polyester (A2) having an acid number of less than 13 mg of KOH/g, the acid number being as measured according to ISO 3682.

2. Resin composition according to claim 1, characterized in that the modified unsaturated polyester (A2) has been obtained as a reaction product from a reaction of a monofunctional component (F) containing an epoxide or isocyanate functional group with the acid end groups of a standard unsaturated polyester having an acid number of more than 13 mg of KOH/g.

3. Resin composition according to Claim 2, characterized in that the monofunctional component (F) is a monofunctional epoxide of formula (1): 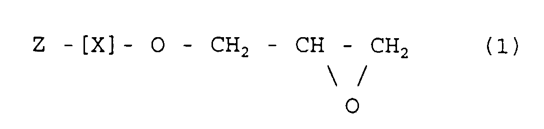 in which Z is an organic group having from 2 up to and including 20 carbon atoms, and in which [X] represents a carbonyl group or a methylene group.

4. Resin composition according to Claim 3, characterized in that Z is an alkyl group having from 8 up to and including 18 carbon atoms.

5. Resin composition according to any of claims 1-4, characterized in that the weight ratio between the standard unsaturated polyester (A1) and the modified unsaturated polyester (A2) is in the range of 5:95 to 95:5.

6. Resin composition according to claim 5, characterized in that the weight ratio between the standard unsaturated polyester (A1) and the modified unsaturated polyester (A2) is in the range of 30:70 to 70:30.

7. Resin composition according to any of claims 1-6, characterized in that the resin composition also comprises a mould release agent (G) in an amount of from 0.01 to 2.0 wt.% relative to the resin composition's total weight.

8. Resin composition according to any claim 7, characterized in that the resin composition contains less than 0.5 wt.% of (G), relative to the resin composition's total weight.

9. Resin composition according to any one of Claims 2-8, characterized in that the amount of component (F) is between 0.1 and 10 wt.%, relative to the total weight of component (A2).

10. Resin composition according to Claims 9, characterized in that the amount of component (F) is between 0.5 and 5 wt.%, relative to the total weight of component (A2).

11. The use of a resin composition according to any one of Claims 1-10 in a headlight housing.

12. The use of a resin composition containing components (A1), (A2), (B), (C) and (G) in a headlight housing.
